# EUROPEAN PATENT APPLICATION

(11) **EP 3 495 124 A1**
(43) Date of publication of application: **12.06.2019**
(21) Application number: 17205609.5
(22) Date of filing: 06.12.2017
(51) Int. Cl.: B29C 73/02, B64F 5/40, F01D 5/00, B29C 73/26

(54) **REPAIR SOLUTION AND PROCESS FOR WIND TURBINE LEADING EDGE PROTECTION TAPE**

(71) Applicant: 3M Innovative Properties Company, Saint Paul, MN 55133-3427 (US)
(72) Inventor: Schoeppel, Wolfgang, 41470 Neuss (DE)
(74) Representative: Müller, Bruno

(57) **Abstract**

The invention relates to a method for repairing a composite substrate (1) and a protection layer (2) comprising at least one thermoplastic polymer (3) and having at least one area of damage (5), the method comprising defining at least one area of the protection layer to be repaired (5), optionally removing at least part of the damaged part of the protection layer (2), applying a thermoplastic polymer solution (7) in at least one organic solvent to the area to be repaired (5), wherein the thermoplastic polymer in the thermoplastic polymer solution (7) is the same thermoplastic polymer as the thermoplastic polymer (3) in the protection layer (2) and allowing the organic solvent to evaporate.

## Description

### Field

The present disclosure relates to a method for repairing a surface of rotor blades, in particular wind turbines or helicopters or aircraft wings. The present disclosure relates to a method for repairing rotor blades comprising a protection layer. In addition, the present disclosure further relates to the use of a thermoplastic polymer polyurethane solution as a repair solution for repairing a protection layer on the surface of rotor blades or aircraft wings.

### Background

It has long been known that objects made of polymeric of composite materials travelling at high speeds may suffer from erosion due to contact with dust, sand or even rain. In fact, this is well observed with regard to the leading edges of rotor blades of for example rotor blades of helicopters, wings of aircrafts, and, since their introduction, rotor blades of wind turbines. Erosion, in particular rain erosion, can not only be detrimental to the structural integrity or optical integrity or optical appearance of the objects concerned, but also have negative impact on the aerodynamic profile of rotor blades and wings. While it is obvious that this means an undesired deterioration of aerodynamic efficiency of aircraft wings and helicopter rotor blades, it must be stressed that this is also of great concern when running a wind turbine. This circumstance is even aggravated due to the ever increasing size of wind turbines and the corresponding rotor blades, since an increase in size has the consequence of an increase in speed at which a particular point on the leading edge of the rotor blade travels. In particular, at the leading edges closer the tip of the blade speeds are achieved at which rain erosion represents a problem.

Thus, counter-measures were developed, *inter alia,* the application of protection tapes over the leading edges of rotor blades of wind turbines and helicopters. These protection tapes are well-known in the art. Often, polyurethane tapes are used, which are also in most cases equipped with a pressure-sensitive adhesive (PSA) layer for affixing the tape to the rotor blade. However, these tapes are also prone to erosions such as rain erosion and therefore need to be replaced from time to time. Clearly, when undergoing repair, the operation of helicopters and particularly wind turbines must be suspended, which directly means a loss of output of electric energy and a corresponding economic loss. Thus, repair times should be as short as possible, giving rise to a demand for cost- and time-efficient repair measures and equipment which is easy to apply. Moreover, erosion or damage may not only appear on the complete leading edge of rotor blades or wings, but may also be present at small or limited localizations on the edge. Hence, it may be desirable not to remove all of the protection tape, but only repair the damaged or eroded parts. Finally, it may also be desirable that the repaired area exhibits the same erosion protection as the original protection layer. Also, repair of small areas may be necessary because of transportation damages.

In summary, without wanting to deny the advantages and processes in the art in this regard, there still exists a need for new methods for repairing erosion protection layers, in particular on leading edges of rotor blades, in particular of wind turbines and helicopters as well as aircraft wings. There exists also a need for new methods for repairing smaller damages, like punctures, tears, cuts or gaps in erosion protection tapes.

### Summary

In one aspect of the present invention, there is provided a method for repairing a surface of rotor blades or aircraft wings, comprising;
a. a composite substrate; and
b. a protection layer comprising at least one thermoplastic polymer and having at least one area of damage,
the method comprising
i. defining at least one area of the protection layer to be repaired;
ii. optionally removing at least part of the damaged part of the protection layer;
iii. applying a thermoplastic polymer solution in at least one organic solvent to the area to be repaired, wherein the thermoplastic polymer in the thermoplastic polymer solution is the same thermoplastic polymer as the thermoplastic polymer in the protection layer, and
iv. allowing the organic solvent to evaporate.

In another aspect of the present invention, there is provided a use of a thermoplastic polymer polyurethane solution as a repair solution for repairing the protection layer comprising;
a. a composite substrate;
b. and a protection layer comprising at least one thermoplastic polymer and having at least one area of damage
on the surface of rotor blades or aircraft wings.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e. g., 1 to 10 includes 1.4, 1.9, 2.33, 5.75, 9.98, etc.). Also herein, recitation of "at least one" includes all numbers of one and greater (e. g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt. unless specified otherwise. If the amounts of ingredients is identified by % mole the amount of all ingredients gives 100 % mole unless specified otherwise.

Unless explicitly stated otherwise, all embodiments of the present disclosure can be combined freely.

The method of the invention gives rise to a combination of effects desirable for the repair and maintenance of rotor blades or aircraft wings, such as rotor blades of wind turbines or helicopters. In particular, the thermoplastic polymer solution in the method as described herein enables the skilled person to quickly repair localized parts of damaged protective layers on substrates. For example, in one step of the method, the area to be repaired is defined. This gives the skilled person a fast and accurate visual indication of the area to be repaired. In another step of the method, the organic solvent is allowed to evaporate. This may take only a few hours, whilst steps in other repair solutions are known to take much longer. The thermoplastic polymer in the thermoplastic polymer solution and the thermoplastic polymer in the polymer layer may be the same. This allows for an improved bond between the undamaged part and the repaired part therefore providing better erosion properties. In addition, the repaired part of the protection layer may exhibit the same erosion protective properties as the original undamaged part. Thus, the presently described method is suited for efficiently repairing damaged parts of erosion protection layers of aircraft wings or rotors of helicopters and wind turbines, respectively.
Generally, the present method relates to repairing the surface of aircraft wings and rotor blades of helicopters and wind turbines. Preferably, the method according to the present disclosure is applied for repairing the surface of rotor blades of wind turbines, in particular the leading edges of wind turbines.

The rotor blades and the aircraft wings as used herein generally comprise a composite substrate, one or several coatings, and a protection layer disposed thereon. In most cases, the protection layer will be located on the leading edge of these substrates, since erosion and rain erosion takes part mostly on these areas. The composite substrates itself may consist of composite materials commonly known and used in the art for rotor blades of helicopters and wind turbines as well as aircraft wings. For example, a composite material may be obtained by curing an epoxy or phenoxy resin enforced by fibers or a woven or non-woven fabric, or may contain polyurethane enforced with non-woven or woven fabrics. Fibers and fabrics obtained therefrom may be selected from polymeric fibers, glass fibers, metal fibers, and carbon fibers, dependent on the selected property and price of the desired application. In general, on top of the composite substrate, at least one coating is applied. These coatings may be referred to as top coat or hard coat and may comprise at least one filler material to obtain an even surface and at least one top coat obtained from polyurethanes (often applied as two-component system) and epoxy coating compositions known in the art for these purposes.

The protection layer disposed on the composite substrate may be obtained from an erosion protection tape known in the art. Such a tape may comprise a polymeric layer and a pressure sensitive adhesive (PSA) layer used for affixing the tape onto the substrate. The polymeric layer of the tape forming the protection layer may comprise, for example, polyurethane or a thermoplastic polyurethane (TPU). Erosion protection tapes are, for example, commercially available from 3M Germany GmbH under the trade designation Wind Protection Tape W8607 or W8750.

The protection layer of the substrate may exhibit at least one area of at least partial damage. Damage is either or both physical and chemical damage, however, in the present context physical damage is predominant. Physical damage is in most cases erosion caused by rain, dust, sand, or other particles. In any event, the nature and appearance of such damage is well-known to the skilled person. Moreover, also the coatings and substrate beneath the protection layer may be affected by physical damage such as rain erosion and the like.

Damage comprises all kind of damages, in particular small, localized damage such as cracks or punctual damage, as well as damage in larger areas of several square centimetres. The damage that best works with the current invention, may especially comprise smaller damages, like punctures, tears, cuts or gaps. If the damage is larger, e. g. approximately more than 5 centimetres in width, the current invention can be combined with other repair solutions such as for example with a repair solution using a repair patch of a polymer tape. The current invention may be used in such a scenario to seal any gaps that may exist between the protection layer and the repair tape. Also, damage comprises damage only to a certain thickness of the protective layer or to the complete thickness of the protective layer and the surface under the protective layer, i. e. the hard coat of the composite substrate itself.

In the first step of the method according to the present invention, at least one area of the protection layer to be repaired is defined. This may be done using a variety of methods such as using erasable ink or protective tape such as masking tape. This step of the method gives a better visual indication of where the area of damage is, and to make it more easily discernible to the eye of the user.

Optionally at least part of the damaged part of the protection layer, i. e. protection tape affixed to the substrate surface, is removed. Preferably, the complete damaged part of the protection layer is removed. Also, damaged top coatings, fillers, or other underlying layers may need to be removed. As appreciated by the skilled person, areas are cut with for example a knife or other cutlery and then the damaged parts are removed in strips or patches. Finally, the removal of protection layers or part of protection layers, or parts of or complete protection tapes is well known in the art. It may not be necessary to remove any damaged part of the protection layer if, for example, the damage is a small cut in the protection layer and for example is under approximately 20 millimetres in width.

Next, a thermoplastic polymer solution in at least one organic solvent is applied to the area to be repaired, wherein the thermoplastic polymer in the thermoplastic polymer solution is the same thermoplastic polymer as the thermoplastic polymer in the protection layer.

With regard to the term 'thermoplastic polymer' will be known to a person skilled in the art to also mean thermoplastic elastomer i. e. compounds behaving at room temperature similar to classic elastomers, but are mouldable into shape under addition of heat, i. e. which exhibit in addition to elastomeric properties thermoplastic behaviour. Of particular importance is that thermoplastic polymer in the thermoplastic polymer solution is the same thermoplastic polymer as the thermoplastic polymer in the protection layer. This allows for an improved bond between the undamaged part and the repaired part therefore providing better erosion properties. In addition, the repaired part of the protection layer may exhibit the same erosion protective properties as the original undamaged part. Of further importance to the present disclosure is the elastomeric behaviour under ambient conditions, i. e. the ability to stretch or deform under physical influence and return to its original or near original shape. This has the benefit of creating a longer life and better physical range than other materials, which means that these materials may act as a protection layer for the composite substrate against physical influence such as raindrops, sand or dust particles impinging the substrate surface at high speeds.

The undamaged thermoplastic polymer in the protection layer adjacent to the thermoplastic polymer solution dissolves slightly in the organic solvent in the thermoplastic polymer solution. This consequently allows the thermoplastic polymer in the protection layer and the thermoplastic polymer in the thermoplastic polymer begin to crosslink together.

The final step in the method is allowing the organic solvent to evaporate. As the organic solvent evaporates, the bonding achieved between the thermoplastic polymer in the protection layer and the thermoplastic polymer in the thermoplastic polymer solution remains and they are now cohesively joined. The thermoplastic polymer solution therefore ensures the area to be repaired, once repaired, is better integrated with the thermoplastic polymer in the protection layer. This is one of the benefits of the thermoplastic polymer in the thermoplastic polymer solution being the same thermoplastic polymer as the thermoplastic polymer in the protection layer. Another benefit is improved erosion resistance as there is a good bond between the undamaged part and the repaired part. Also, the thermoplastic polymer from the thermoplastic polymer solution exhibits the same erosion properties as the thermoplastic polymer in the thermoplastic polymer layer.

Preferably, the at least one thermoplastic polymer in the thermoplastic polymer solution and the protection layer is selected from thermoplastic polyurethane, styrenic block copolymers, thermoplastic olefins, elastomeric alloys, thermoplastic copolyesters, thermoplastic polyamides and combinations thereof. Exemplary, commercially available thermoplastic elastomers are these under the trade designations Thermolast, Santoprene (block copolymers), Thermolast A, Forprene, Termoton-V (elastomeric alloys), Sofprene (SBS), Laprene (SBS), Thermolast K (SEBS) (styrenic block copolymers), For-Tec E (thermoplastic olefins), Desmopan, Elastollan, Avalon, Irogran (thermoplastic polyurethane). Since thermoplastic polyurethanes exhibit properties such as elasticity, transparency, and a certain resistance to oil, grease and abrasion, they are preferred as thermoplastic elastomers in the present disclosure.

The at least one organic solvent in the thermoplastic polymer solution may be selected from tetrahydrofurane, diethylether, dichloromethane, trichloromethane, ethyl acetate, dimethylformamide, ethanol, cyclohexane, butanol, pentanol, hexanol, diethylene glycol, diethylene glycol dimethyl ether, methyl tert-butylether, methylene chloride, pentane, hexane, petroleum ether, xylene, and mixtures thereof. Of these solvents, tetrahydrofurane, isopropanol and ethanol, dichloromethane and mixtures thereof are particularly preferred, with particular preference of tetrahydrofurane. Alternatively, aqueous dispersions of e. g. thermoplastic polyurethanes may be used.

In the at least one area of the protection layer to be repaired is defined in step i. of the claimed method by applying a tape such that the area of damage is surrounded. This also gives a better visual indication as to where the area of damage is if it is not easily discernible to the eye of the user.

According to another embodiment, the steps of applying a thermoplastic polymer solution in at least one organic solvent to the area to be repaired, wherein the thermoplastic polymer in the thermoplastic polymer solution is the same thermoplastic polymer as the thermoplastic polymer in the protection layer (step iii); and allowing the organic solvent to evaporate (step iv), are repeated until the evaporated polymer solution fills the area of damage in the protection layer. Depending on the depth of the area to be repaired in the protection layer, sufficient further applications of the thermoplastic polymer solution may be required to ensure there is even application between the protection layer in the non-damaged area and the thermoplastic polymer solution in the area to be repaired. Further applications of the thermoplastic polymer solution should be made by visual inspection.

In another embodiment the tape is removed before the at least one organic solvent is fully evaporated. This is to ensure there is a smooth transition between the protection layer and the thermoplastic polymer in the thermoplastic polymer solution. A smooth transition is achieved when the tape is removed because the organic solvent is not fully evaporated, so allows the thermoplastic polymer solution to continue wetting onto the surface of the protection layer. The organic solvent continues to evaporate therefore there is no edge left to the repair and there is good surface contact between the protection layer and the thermoplastic polymer in the thermoplastic polymer solution. This provides better erosion resistance and less friction during movement of the aircraft wing or turbine blade.

According to another embodiment the organic solvent in the thermoplastic polymer solution dissolves the thermoplastic polymer in the protection layer where it is contacted by the thermoplastic polymer solution fusing the polymer of the thermoplastic polymer solution and the thermoplastic polymer of the protection layer together. The thermoplastic polymer solution therefore ensures the area to be repaired, once repaired, is better integrated with the thermoplastic polymer in the protection layer. This improves erosion resistance.

In another embodiment the thermoplastic polymer solution applied in step ii has a viscosity in the range 200,000 to 400,000 mPa·s. This range of viscosity is to ensure the thermoplastic polymer solution can be applied to the damaged area and has a paste like consistency making application of the thermoplastic polymer solution easier to control.

In another embodiment the thermoplastic polymer solution applied in step ii. has a concentration up to 40 % by weight. In a preferred embodiment, the concentration is in a range of 20 % by weight to 40 % by weight. This ensure the solvent has a shorter evaporation time in ambient conditions and there is enough solid content for the viscosity required for the thermoplastic polymer solution.

According to another embodiment the width of the damaged area is no larger than 20 mm. The width of the damaged area is defined as being the shortest dimension across the damaged area in a linear direction.

In another embodiment the thermoplastic polymer solution has a boiling point in the range of 30 °C and 250 °C. This allows the organic solvent to have a shorter evaporation time in ambient conditions.

Another aspect of this invention is a use of a thermoplastic polymer polyurethane solution as a repair solution for repairing a protection layer comprising:
a. a composite substrate; and
b. a protection layer comprising at least one thermoplastic polymer and having at least one area of damage,
on the surface of rotor blades or aircraft wings.

This provides efficient repair of damaged parts of erosion protection layers of aircraft wings or rotors of helicopters and wind turbines, respectively. Thermoplastic polyurethanes exhibit properties such as elasticity, transparency, and a certain resistance to oil, grease and abrasion, they are preferred as thermoplastic elastomers in the present disclosure.

All the features disclosed in connection with the method may also be combined with the use of a thermoplastic solution as a repair solution for repairing a protection layer.

In another embodiment the protection layer is located on the leading edge of the rotor blade, preferably wherein the protection layer is a rain erosion protection layer. This is to ensure better erosion protection.

In another embodiment the thermoplastic polyurethane solution has a viscosity in the range 200,000 to 400,000 mPa·s.

In another embodiment the thermoplastic polyurethane solution has a concentration up to 40 % by weight.

In another embodiment the thermoplastic polymer solution has a boiling point in the range of 30 °C and 250 °C. This allows the organic solvent to have a shorter evaporation time in ambient conditions.

### Drawings

The invention will now be described in more detail with reference to the following Figures exemplifying particular embodiments of the invention:
- Fig. 1: is a schematic drawing of a cross-section of a substrate and a protection layer with an area of partial damage;
- Fig. 2: is a schematic drawing of the substrate and protection layer of Fig. 1 with a masking tape either side of the area of partial damage;
- Fig. 3: is a schematic drawing of the substrate and protection layer of Fig. 1 and 2 with a first application of a thermoplastic polymer solution;
- Fig. 4: is a schematic drawing of the substrate layer of Fig. 1 and 2 after an at least one organic solvent in the thermoplastic polymer solution has evaporated;
- Fig. 5: is a schematic drawing of Fig. 4 after a second application of the thermoplastic polymer solution;
- Fig. 6: is a schematic of Fig. 5 after the at least one organic solvent in the thermoplastic polymer solution has almost evaporated and
- Fig. 7: is a schematic drawing of Fig. 6 after the masking tape has been removed and the organic solvent has fully evaporated.

Below various embodiments of the present invention are described and shown in the drawings wherein like elements are provided with the same reference numbers.

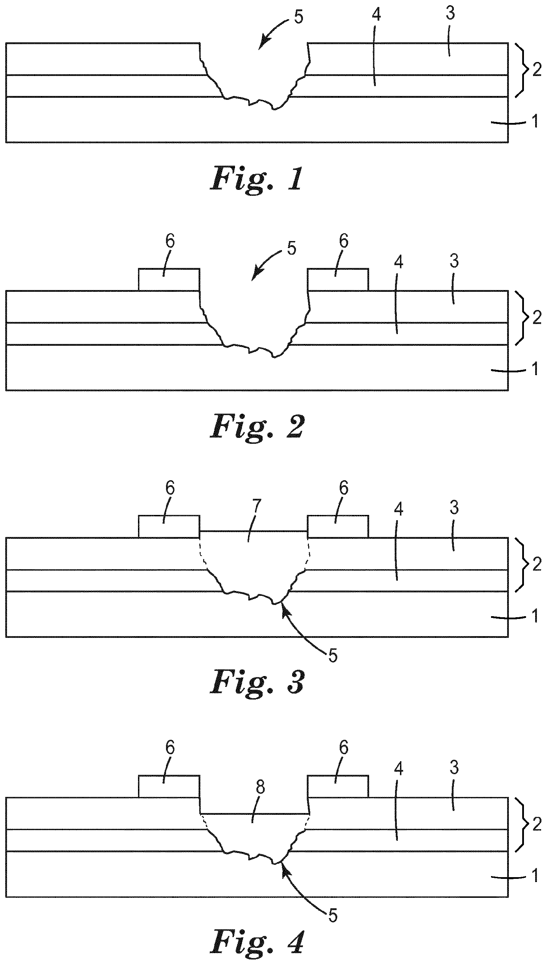

In Fig. 1, a cross section of substrate 1 with a protection layer 2 can be seen. The protection layer 2 comprises a polymer layer 3 and an adhesive layer 4, wherein the adhesive layer 4 is positioned between the polymer layer 3 and the substrate 1 and serves to adhere the polymer layer 3 to the surface of the substrate 1. The polymer layer 3 comprises a thermoplastic polyurethane. The adhesive layer 4 may for example be a pressure sensitive adhesive. Fig. 1 further shows an area of minor damage 5 in the protection layer 2. The damage affects the polymer layer 3, the adhesive layer 4 and the substrate 1.

In Fig. 2, a masking tape 6 has been applied on top of the protection layer 2. It surrounds the damaged area 5 and therewith defines the damaged area 5.

In Fig. 3, a thermoplastic polymer solution 7 is applied to the area of damage 5 with for example a spatula (not seen in Fig. 3). The thermoplastic polymer solution 7 begins to interact with the thermoplastic polymer layer 3 and the organic solvent (not seen in Fig. 3) from the thermoplastic solution 7 begins to dissolve the polymer layer 3 where there is interaction.

In Fig. 4, the organic solvent of the thermoplastic polymer solution 7 (not seen in Fig. 4) evaporates leaving behind the thermoplastic polymer 8 filling some of the damaged area 5. The organic solvent may for example be tetrahydrofurane. The thermoplastic polymer 8 from thermoplastic polymer solution 7 and the thermoplastic polymer in polymer layer 3 fuse together.

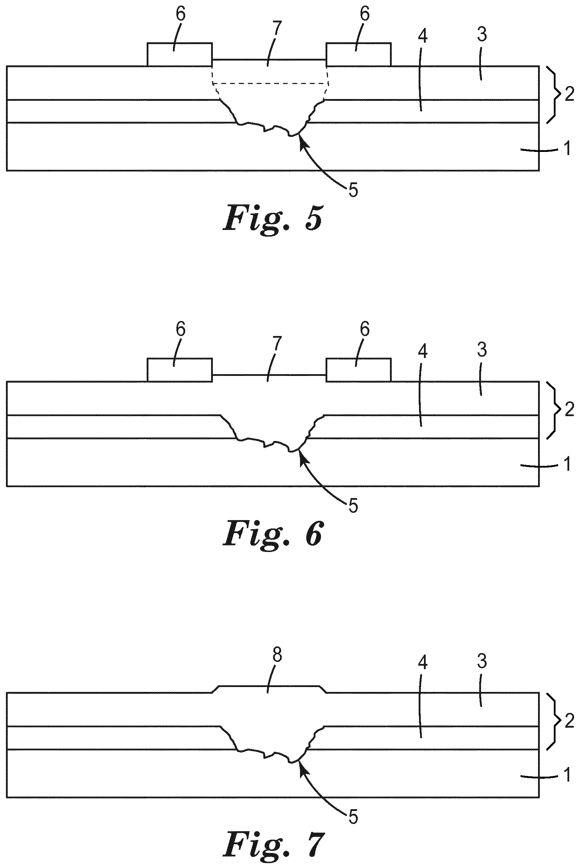

In Fig. 5, the thermoplastic polymer solution 7 is applied once again with for example a spatula on top of the thermoplastic polymer 4. The thermoplastic polymer solution once again interact with the thermoplastic polymer layer 3 and the organic solvent (not seen in Fig. 3) from the thermoplastic solution 7 begins to dissolve the polymer layer 3 where there is interaction.

In Fig. 6, the organic solvent of the thermoplastic polymer solution 7 partially evaporates leaving behind the thermoplastic polymer 8 in the damaged area 5. The thermoplastic polymer 8 from thermoplastic polymer solution 7 and the thermoplastic polymer in polymer layer 3 fuse together.

In Fig. 7, the organic solvent of the thermoplastic polymer solution 7 fully evaporates and masking tape 6 has been removed to allow the thermoplastic polymer 8 which has been left behind after evaporation to cover the protection layer 2 so a smooth transition between the thermoplastic polymer and protection layer may be obtained.

It is also possible to use the method according to the invention for a protection layer 2 that does not provide an adhesive layer, e. g. a coating.

### Examples

The present disclosure is further described without however wanting to limit the disclosure thereto. The following examples are provided to illustrate certain embodiments but are not meant to be limiting in any way.

### Materials used:

3M™ Wind Protection Tape W8750 tape
KRYSTALGRAN®PE
Tetrahydrofuran (THF)
Isopropyl Alcohol
Spatula

### Thermoplastic polymer solution

A 40 % by weight solution of KRYSTALGRAN® PE in THF was prepared by stirring.

### Preparation of substrate

A polypropylene plate was cleaned with isopropyl alcohol.

Two sheets of 3M™ Wind Protection Tape W8750 tape wind protection tape were prepared by laminating them to a polypropylene plate with a gap of 5 mm between the two sheets to signify an area of damage. Two pieces of masking tape were used to define the area around the damage to be repaired.

### Application procedure

A spatula was dipped into the thermoplastic polymer solution and applied to the gap of 5 mm, between the pieces of masking tape. The THF was allowed to evaporate and after approximately 5 minutes, the spatula was again dipped into the thermoplastic polymer and applied to the gap. Before the THF was fully evaporated the masking tape was removed. The THF was then allowed to fully evaporate.

The polypropylene plate was stored under ambient conditions for 1 week to obtain final performance.

On visual inspection, the area of damage is visibly repaired and there is little visible difference between the previously damaged area and the undamaged area.

## Claims

1. A method for repairing a surface of rotor blades or aircraft wings, comprising
a. a composite substrate; and
b. a protection layer comprising at least one thermoplastic polymer and having at least one area of damage,
the method comprising
i. defining at least one area of the protection layer to be repaired;
ii. optionally removing at least part of the damaged part of the protection layer;
iii. applying a thermoplastic polymer solution in at least one organic solvent to the area to be repaired, wherein the thermoplastic polymer in the thermoplastic polymer solution is the same thermoplastic polymer as the thermoplastic polymer in the protection layer; and
iv. allowing the organic solvent to evaporate.

2. The method according to claim 1, wherein the thermoplastic polymer in the protection layer and the thermoplastic polymer in the thermoplastic polymer solution is selected from thermoplastic polyurethane, styrenic block copolymers, thermoplastic olefins, elastomeric alloys, thermoplastic copolyesters, thermoplastic polyamides and combinations thereof.

3. The method according to claim 1 or 2, wherein the at least one organic solvent in the thermoplastic polymer solution is selected from tetrahydrofurane, diethylether, dicholormethane, trichloromethane, ethyl acetate, dimethylformamide, ethanol, cyclohexane, butanol, pentanol, hexanol, diethylene glycol, diethylene glycol dimethyl ether, methyl tert-butylether, methylene chloride, pentane, hexane, petroleum ether, xylene, and mixtures thereof.

4. The method according to any of the preceding claims, wherein the at least one area of the protection layer to be repaired is defined in step i. of the claimed method by applying a tape such that the area of damage is surrounded.

5. The method according to any of the preceding claims, wherein steps iii. and iv. of the claimed method are repeated until the evaporated thermoplastic polymer solution fills the area of damage in the protection layer.

6. The method according to any of the preceding claims, wherein the tape is removed before the at least one organic solvent is fully evaporated.

7. The method according to any of the preceding claims, wherein the organic solvent in the thermoplastic polymer solution dissolves the thermoplastic polymer in the protection layer where it is contacted by the thermoplastic polymer solution fusing the polymer of the thermoplastic polymer solution and the thermoplastic polymer of the protection layer together.

8. The method according to any of the preceding claims, wherein the thermoplastic polymer solution applied in step ii. has a viscosity in the range 200,000 to 400,000 mPa·s.

9. The method according to any of the preceding claims, wherein the thermoplastic polymer solution applied in step ii. has a concentration up to 40 % by weight.

10. A use of a thermoplastic polymer polyurethane solution as a repair solution for repairing a protection layer comprising;
a. a composite substrate; and
b. a protection layer comprising at least one thermoplastic polymer and having at least one area of damage,
on the surface of rotor blades or aircraft wings.

11. The use of claim 11, wherein the protection layer is located on the leading edge of the rotor blade, preferably wherein the protection layer is a rain erosion protection layer.

12. The use of claim 11, wherein the thermoplastic polyurethane solution has a viscosity in the range 200,000 to 400,000 mPa·s.

13. The use of claim 12 of any of the preceding claims wherein the thermoplastic polyurethane solution has a concentration up to 40 % by weight.
